# EUROPÄISCHE PATENTANMELDUNG

(11) **EP 1 821 170 A2**
(43) Veröffentlichungstag der Anmeldung: **22.08.2007**
(21) Anmeldenummer: 07001818.9
(22) Anmeldetag: 27.01.2007
(51) Int. Cl.: G05D 16/10

(54) **Druckreduzierventil**

(30) Priorität: 21.02.2006 DE 102006008024
(71) Anmelder: ROBERT BOSCH GMBH, 70442 Stuttgart (DE)
(72) Erfinder: Lauer, Peter, 97816 Lohr am Main (DE); Krenzer, Günter, 97776 Eußenheim (DE)
(74) Vertreter: Thürer, Andreas

(57) **Zusammenfassung**

Offenbart ist ein Druckreduzierventil (1), insbesondere für eine Spannvorrichtung, mit einem Steuerkolben (10), der gegen eine einstellbare Kraft von einem Regeldruck beaufschlagt ist, und mit einem Schließkörper (42), der in Schließrichtung von der Kraft einer Druckfeder (38) gegen einen Ventilsitz (40) vorgespannt ist, wobei der Schließkörper durch den Ventilsitz hindurch über ein Übertragungsglied aus seiner Schließstellung in seine Offenstellung bringbar ist, so dass die Druckmittelströmung von einem Druckeingang (P) zu einem Regeldruckausgang (A) aufsteuerbar ist. Erfindungsgemäß ist der Steuerkolben zur Aufnahme des Schließkörpers als Hohlkolben ausgeführt und bildet den Ventilsitz für den im Steuerkolben geführten Schließkörper aus.

## Beschreibung

Die Erfindung betrifft ein Druckreduzierventil, insbesondere für eine Spannvorrichtung gemäß dem Oberbegriff des Patentanspruchs 1.

Bei derartigen, beispielsweise in hydraulischen Spannvorrichtungen von Werkzeugmaschinen eingesetzten Druckreduzierventilen erfolgt die Reduzierung eines Eingangsdrucks bzw. das Konstanthalten eines Ausgangsdrucks (Regeldrucks) auf einen Wert, der unter dem im Hauptkreis herrschenden Systemdruck liegt. Hierzu wird der Ausgangsdruck zu der Stirnseite eines Steuerkolbens geleitet und dort hydraulisch mit einer eingestellten Kraft, beispielsweise der Kraft einer Regelfeder mit einstellbarer Vorspannung oder der Kraft eines Proportionalmagneten verglichen, die den Wert des Regeldrucks bestimmt. Übersteigt die hydraulische Kraft die eingestellte Kraft, so bewegt sich der Steuerkolben in Schließrichtung eines Schließkörpers, der die Druckmittelströmung zum Regeldruckausgang unterbricht.

Ein derartiges Druckreduzierventil ist beispielsweise aus der EP 0 955 472 B1 bekannt. Dieses herkömmliche Druckreduzierventil zum Regeln eines Eingangsdrucks auf einen einstellbaren Wert, hat ein Ventilgehäuse mit einer ersten Kammer, die von einer zweiten Kammer durch einen Ventilsitz eines Gehäuseeinsatzes getrennt ist. Die erste Kammer ist mit einem Eingangsanschluss für den Eingangsdruck verbunden, während die zweite Kammer mit einem Anschluss für den Ausgangsdruck verbunden ist. In der zweiten Kammer ist ein aus einer leckagefreien, federvorgespannten Schließstellung in Öffnungsrichtung relativ zu dem Ventilsitz beweglicher Schließkörper angeordnet. Dieser ist mittels eines Steuerkolbens, der von einer in Öffnungsrichtung des Schließkörpers gerichteten Kraft einer Regelfeder beaufschlagt ist, über einen Stößel durch den Ventilsitz hindurch in seine Offenstellung bringbar. Nachteilig bei derartigen Druckreduzierventilen ist, dass diese aufgrund der koaxialen Anordnung des Schließkörpers und des Steuerkolbens eine große Baulänge aufweisen und einen hohen fertigungstechnischen Aufwand erfordern. Insbesondere ist der zur Ausbildung des Ventilsitzes wegen der schwierigen Zugänglichkeit zu den Mittelabschnitten der Ventilbohrung erforderliche Gehäuseeinsatz mit einem zusätzlichen fertigungstechnischen Aufwand verbunden.

Demgegenüber liegt der Erfindung die Aufgabe zugrunde, ein Druckreduzierventil zu schaffen, das eine kürzere Bauweise bei minimalem vorrichtungstechnischen Aufwand ermöglicht.

Diese Aufgabe wird durch ein Druckreduzierventil mit den Merkmalen des Patentanspruchs 1 gelöst.

Das erfindungsgemäße Druckreduzierventil hat einen gegen eine einstellbare Kraft von einem Regeldruck beaufschlagten Steuerkolben und einen in Schließrichtung von der Kraft einer Druckfeder gegen einen Ventilsitz vorgespannten Schließkörper, der durch den Ventilsitz hindurch über ein Übertragungsglied aus seiner Schließstellung in eine Offenstellung bringbar ist, so dass die Druckmittelströmung von einem Druckeingang zu einem Regeldruckausgang aufsteuerbar ist. Erfindungsgemäß ist der Steuerkolben zur Aufnahme des Schließkörpers als Hohlkolben ausgeführt und bildet den Ventilsitz für den, im Steuerkolben geführten Schließkörper aus. Die erfindungsgemäße Lösung ermöglicht durch die Unterbringung des Schließkörpers im Steuerkolben eine gegenüber dem Stand der Technik gemäß der EP 0 955 472 B1 wesentlich verkürzte Baulänge des Druckreduzierventils. Des Weiteren ist der Ventilsitz des Schließkörpers im Steuerkolben ausgebildet, so dass kein Gehäuseeinsatz in der Ventilbohrung erforderlich ist. Dadurch vereinfacht sich die Herstellung des Druckreduzierventils erheblich, da das Ventilgehäuse einen vergleichsweise einfachen Aufbau bei verringerter Anzahl der benötigten Bauelemente aufweist und für die Fertigung gut zugänglich ist.

Gemäß einem bevorzugten Ausführungsbeispiel der Erfindung ist der Steuerkolben in einer Ventilbohrung geführt und begrenzt mit dieser über eine Stirnfläche einen mit dem Regeldruck beaufschlagten Steuerraum.

Der Steuerraum ist vorzugsweise über zumindest einen Steuerkanal mit dem Regeldruckausgang verbunden.

Bei einer besonders einfachen Lösung findet als Übertragungsglied ein gehäusefester Stößel Verwendung, der den Schließkörper in Offenstellung durch den Ventilsitz hindurch gegen die Kraft der Druckfeder abstützt. Der Stößel hat einen gegenüber dem Durchmesser des Ventilsitzes verringerten Durchmesser, so dass ein ringförmiger Strömungskanal zwischen dem Stößel und dem Ventilsitz entsteht.

Bei einer bevorzugten Ausführung der Erfindung ist der Innenraum des Steuerkolbens über zumindest eine Radialbohrung im Steuerkolben mit dem Eingangsdruck beaufschlagt. Vorzugsweise münden die Radialbohrungen im Bereich des Schließkörpers in den Innenraum des Steuerkolbens ein, so dass die Länge des Strömungswegs und dadurch der Strömungswiderstand verringert sind. Als Schließkörper findet vorzugsweise eine Kugel Verwendung.

Die Radialbohrungen münden bei einem Ausführungsbeispiel des Druckreduzierventils in eine am Außenumfang des Steuerkolbens vorgesehene, mit dem Druckeingang über zumindest einen Druckkanal verbundene umlaufende Ringnut oder Tasche ein.

Der Steuerkolben steht zur Drucküberwachung vorzugsweise mit einem Drucküberwachungssensor, beispielsweise einem elektrischen Schalter, in Wirkverbindung, dessen Schaltpunkt auf den geregelten Druck oder einen geringeren Wert eingestellt ist. Wenn der am Regelausgang einzuregelnde Druck, beispielsweise der Spanndruck für ein Werkzeug erreicht ist, wird der Druckschalter betätigt.

Vorzugsweise hat der Steuerkolben einen Radialbund, der mit zumindest einem gehäusefesten Anschlag zusammenwirkt. Dadurch wird der Verschiebeweg des Steuerkolbens begrenzt.

Als besonders einfache Lösung hat es sich erwiesen, wenn der Steuerkolben den Drucküberwachungssensor über den Radialbund betätigt.

Die auf den Steuerkolben in Öffnungsrichtung wirkende Kraft wird bei einem Ausführungsbeispiel der Erfindung durch zumindest eine Regelfeder oder einen Proportionalmagneten aufgebracht. Die Vorspannung der Regelfeder ist vorzugsweise über ein Einstellelement, insbesondere eine Stellspindel veränderbar, um den Regeldruck.zu verändern.

Der Druckeingang ist vorzugsweise über zumindest eine Radialdichtung gegenüber dem Regeldruckausgang und gegenüber dem Raum mit der Regelfeder oder dem Proportiohalmagneten abgedichtet.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 einen Längsschnitt durch ein erfindungsgemäßes Druckreduzierventil und
Figur 2 einen Längsschnitt im Bereich des Steuerkolbens durch ein erfindungsgemäßes Druckreduzierventil gemäß einem weiteren Ausführungsbeispiel.

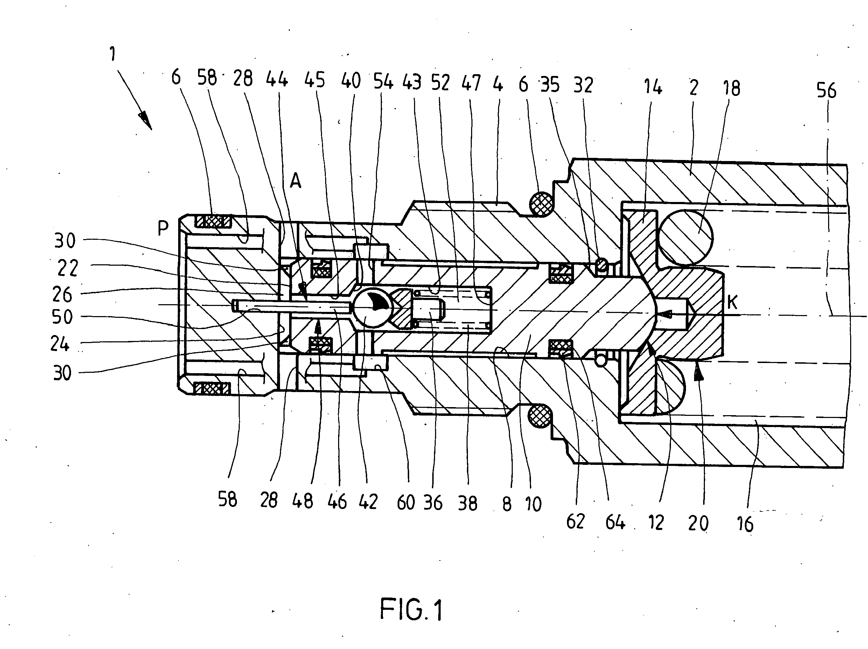

Figur 1 zeigt einen Längsschnitt durch ein erfindungsgemäßes Druckreduzierventil 1 mit einem patronenförmigen Ventilgehäuse 2, das über ein Gewinde 4 in ein Steuerblockgehäuse (nicht dargestellt) einschraubbar ist. Das Ventilgehäuse 2 hat drei im Durchmesser abgestufte Bereiche, die mit einer entsprechenden Stufenbohrung im Steuerblockgehäuse zusammenwirken, wobei über Dichtringe 6 ein stirnseitiger Druckeingang P (Pumpenanschluss) und ein Regeldruckausgang A des Ventilgehäuses 2 gegeneinander abgedichtet sind. Das Ventilgehäuse 2 hat eine stufenförmige, etwa sacklochförmig ausgebildete Ventilbohrung 8 in der ein gegen eine einstellbare Kraft K von einem Regeldruck beaufschlagter Steuerkolben 10 axial verschiebbar aufgenommen ist. Bei dem gezeigten Ausführungsbeispiel ist der Steuerkolben 10 in Schließrichtung über einen balligen Endabschnitt 12 an einem Federteller 14 abgestützt und über diesen von der Kraft einer in einem Federraum 16 angeordneten Regelfeder 18 belastet, die zur Veränderung der Federvorspannung, d.h. der Kraft K, über eine in das Ventilgehäuse 2 eingeschraubte Stellspindel (nicht dargestellt) abgestützt ist. Der Federteller 14 hat zur Aufnahme der Regelfeder 18 einen abschnittsweise an die Innenkontur der Regelfeder 18 angepassten Stützabschnitt 20, der die Feder 18 teilweise durchsetzt.

Bei einem nicht dargestellten Ausführungsbeispiel der Erfindung wird die Kraft K über einen Proportionalmagneten auf den Steuerkolben 10 aufgebracht.

Der Steuerkolben 10 begrenzt über eine Stirnfläche 22 mit einer Grundfläche 24 der Ventilbohrung 8 einen Steuerraum 26, der über mehrere, in einer Radialebene liegende Steuerkanäle 28 mit dem Regeldruckausgang A verbunden ist. Die Stirnfläche 22 des Steuerkolbens 10 ist zum Beabstanden von der Grundfläche 24 der Ventilbohrung 8 mit durch eine Durchbruchsnut ausgebildeten Vorsprüngen 30 versehen, so dass der Steuerkolben 10 nicht flächig anliegt und vom Druck im Steuerraum 26 gegen die Kraft der Regelfeder 18 beaufschlagt ist. Weiterhin werden dadurch Fluiddurchlässe ausgebildet. Der Weg des Steuerkolbens 10 ist über einen in die Umfangswandung der Ventilbohrung 8 eingelegten Sicherungsring 32 begrenzt, gegen den der Steuerkolben 10 nach einem definierten Verschiebeweg über eine schräg verlaufende Anschlagfläche 35 aufläuft.

Das Druckreduzierventil 1 hat einen in Schließrichtung über ein Federwiderlager 36 von der Kraft einer Druckfeder 38 in Richtung eines Ventilsitzes 40 vorgespannten Schließkörper 42, der durch den Ventilsitz 40 hindurch über ein Übertragungsglied 44 aus seiner Schließstellung in seine dargestellte Offenstellung gebracht werden kann, so dass über den mit dem Schließkörper 42 zusammenwirkenden Steuerkolben 10 eine Druckmittelverbindung vom Druckeingang P zum Regeldruckausgang A aufgesteuert ist. Erfindungsgemäß ist der Steuerkolben 10 zur Aufnahme des Schließkörpers 42 als Hohlkolben ausgeführt und bildet den Ventilsitz 40 für den im Steuerkolben 10 geführten Schließkörper 42 aus. Die erfindungsgemäße Lösung ermöglicht durch die Unterbringung des Schließkörpers 42 im Steuerkolben 10 eine kurze Baulänge des Druckreduzierventils 1. Der Steuerkolben 10 hat zur Aufnahme des Schließkörpers 42 eine Ventilbohrung 43, in die im Bereich des Ventilsitzes 40 eine Axialbohrung 45 einmündet. An dem vom Ventilsitz 40 beabstandeten Ende ist die Ventilbohrung 43 durch eine Anlagefläche 47 für die Druckfeder 38 begrenzt. Zum Einbringen des Schließkörpers 42 kann der Steuerkolben 10 beispielsweise zweiteilig ausgeführt sein oder eine über einen Einschraubstopfen verschlossene Einführöffnung aufweisen (nicht dargestellt).

Als Übertragungsglied 44 findet bei dem gezeigten Ausführungsbeispiel ein gehäusefester Stößel 46 Verwendung, der den Schließkörper 42, beispielsweise eine Kugel, in der gezeigten Position durch den Ventilsitz 40 hindurch gegen die Kraft der Druckfeder 38 abstützt. Der Stößel 46 ist in einer Aufnahmebohrung 50 des Ventilgehäuses 2.fixiert und erstreckt sich in der gezeigten federvorgespannten Grundstellung des Steuerkolbens 10 aus dem Ventilsitz 40 heraus in einen Innenraum 52 des Steuerkolbens 10 hinein, so dass der Schließkörper 42 von dem Ventilsitz 40 abgehoben ist. Der Stößel 46 durchsetzt den Ventilsitz 40 mittig und hat einen gegenüber dem Durchmesser des Ventilsitzes 40 verringerten Durchmesser, so dass ein ringförmiger Strömungskanal 48 zwischen dem Stößel 46 und der Bohrung des Ventilsitzes 40 gebildet ist. Der Innenraum 52 des Steuerkolbens 10 ist im Bereich des Ventilsitzes 40 über Radialbohrungen 54 mit dem Druckeingang P verbunden. Hierzu ist der Druckeingang P über achsparallel zu einer Längsachse 56 des Druckreduzierventils 1 verlaufende Druckkanäle 58, die im Bereich der Radialbohrungen 54 in einen Ringkanal 60 einmünden hydraulisch mit den Radialbohrungen 54 verbunden. Die Radialbohrungen 54 münden im Bereich des Schließkörpers 42 in den Innenraum 52 des Steuerkolbens 10 ein. Der Steuerkolben 10 ist über Radialdichtungen 62 gegenüber der Ventilbohrung 8 abgedichtet, so dass der Regeldruckausgang A gegenüber dem Druckeingang P und dieser gegenüber dem Federraum 16 abgedichtet ist. Hierzu ist zwischen dem Druckeingang P und dem Regeldruckausgang A sowie zwischen dem Druckeingang P und dem Federraum 16 jeweils eine, als etwa U-förmiger Einstich ausgebildete Ringnut 64 zur Aufnahme der Radialdichtungen 62 eingebracht.

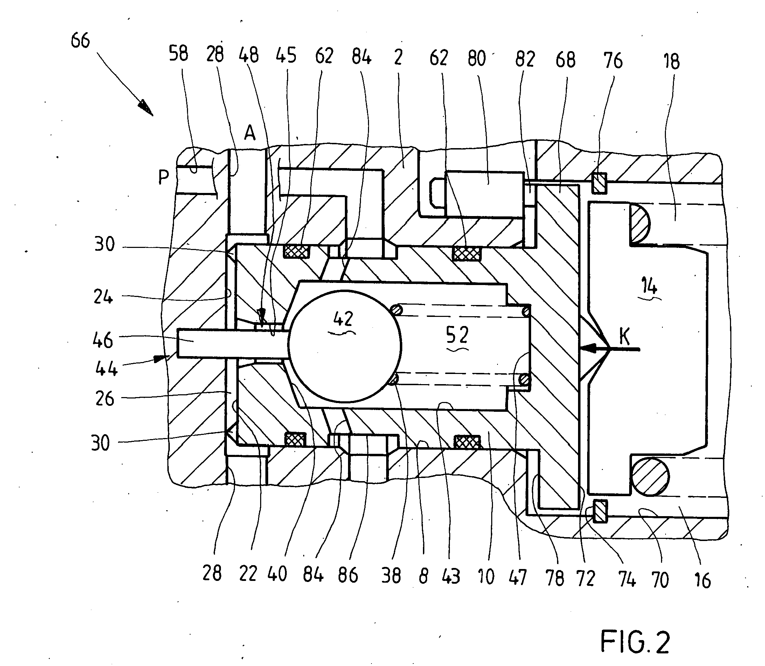

Figur 2 zeigt einen Längsschnitt durch ein erfindungsgemäßes Druckreduzierventil 66 gemäß einem weiteren Ausführungsbeispiel. Dieses unterscheidet sich von dem vorbeschriebenen Ausführungsbeispiel im Wesentlichen dadurch, dass der Steuerkolben 10 einen, in den Federraum 16 eintauchenden Radialbund 68 aufweist, dessen Durchmesser kleiner ist als der Durchmesser eines Bohrungsabschnittes 70 der Ventilbohrung 8 im Bereich des Federraumes 16. In dem Bohrungsabschnitt 70 ist der axiale Verschiebeweg des Steuerkolbens 10 in Richtung der Regelfeder 18 über eine Anschlagfläche 72 des Radialbundes 68 durch eine Anlagefläche 74 eines in den Bohrungsabschnitt' 70 eingesetzten Anschlags 76 begrenzt. Beim Herausdrehen der Stellspindel (nicht dargestellt) gelangt der Steuerkolben 10 über die Anschlagfläche 72 an die Anschlagschulter 74 des Anschlags 76 und folgt der Stellspindel nicht mehr (minimale Vorspannung der Regelfeder 18). Der Radialbund 68 ist über eine von dem Federraum 16 abgewandte Ringstirnfläche 78 mit einem Drucküberwachungssensor 80 in Anlage bringbar, der dem Verschiebeweg des Steuerkolbens 10 über einen Schieber 82 folgt. Der Innenraum 52 des Steuerkolbens 10 ist über schräg verlaufende Radialbohrungen 84 hydraulisch mit dem Druckeingang P verbunden. Hierzu münden die Radialbohrungen 84 im Bereich des Schließkörpers 42 in eine am Außenumfang des Steuerkolbens 10 vorgesehene, mit dem Druckeingang P über den Druckkanal 58 verbundene umlaufende Ringnut 86 in den Innenraum 52 des Steuerkolbens 10 ein.

Zum besseren Verständnis des erfindungsgemäßen Druckreduzierventils 1, 66 sei im Folgenden kurz dessen Funktion anhand Figur 2 beschrieben.

In der in Figur 2 dargestellten federvorgespannten Grundstellung des Druckreduzierventils 66 liegt der Steuerkolben 10 über die Vorsprünge 30 an der Grundfläche 24 der Ventilbohrung 8 an. Der gehäusefeste Stößel 46 durchsetzt den Ventilsitz 40 mittig und erstreckt sich in der gezeigten federvorgespannten Grundstellung des Steuerkolbens 10 aus dem Ventilsitz 40 heraus in den Innenraum 52 des Steuerkolbens 10 hinein, so dass der Schließkörper 42 von dem Ventilsitz 40 abgehoben ist. Da der Stößel 46 einen gegenüber dem Durchmesser des Ventilsitzes 40 verringerten Durchmesser aufweist, wird der ringförmige Strömungskanal 48 zwischen dem Stößel 46 und der Bohrung 45 des Ventilsitzes 40 ausgebildet, so dass eine Druckmittelverbindung vom Druckeingang P zum Regeldruckausgang A geöffnet ist. Die Stirnfläche 22 des Steuerkolbens 10 ist mit dem Regeldruck beaufschlagt. Die Größe des Regeldrucks am Regeldruckausgang A, die erforderlich ist, um den Steuerkolben in seine Schließstellung zu betätigen, ist abhängig von der Vorspannkraft der Regelfeder 18, die durch Einstellung der Stellspindel veränderbar ist. Ist der eingestellte Systemgrenzdruck erreicht, wird der Steuerkolben 10 über den an der Stirnfläche 22 anliegenden Druck soweit nach rechts verschoben, dass der über die Druckfeder 38 gegen den Stößel 46 vorgespannte Schließkörper 42 in Anlage an den Ventilsitz 40 gelangt und die Verbindung zwischen dem Druckeingang P und dem Regeldruckausgang A zugesteuert ist. Der Radialbund 68 des Steuerkolbens 10 ist nun über die Anschlagfläche 72 in Anlage an den Anschlag 76 gebracht. Der Schieber 82 des Drucküberwachungssensors 80 folgt der Bewegung des Steuerkolbens 10 und signalisiert, dass der beispielsweise für eine Spannvorrichtung eines Werkzeugs erforderliche Regelausgangsdruck erreicht ist. Sinkt der Druck am Regeldruckausgang A, beispielsweise durch einen Druckverlust der Spannvorrichtung, unter den über die Regelfeder 18 eingestellten Wert, so wird der Steuerkolben 10 durch die Kraft der Regelfeder 18 nach links verschoben und der Schließkörper 42 über den gehäusefesten Stößel 46 von dem Ventilsitz 40 abgehoben. Dadurch wird der Durchflussquerschnitt zwischen dem Schließkörper 42 und dem Ventilsitz 40 aufgesteuert und der Regeldruckausgang A über den Druckeingang P mit Druckmittel versorgt, bis der gewünschte Regeldruck am Regeldruckausgang A wieder eingeregelt ist. Der Druck in dem Steuerraum 26 steigt wieder auf den eingestellten Wert des Regeldrucks an, wodurch der Steuerkolben 10 in seine Schließstellung zurückgebracht wird und der Schließkörper 42 die Verbindung zwischen dem Druckeingang P und dem Regeldruckausgang A am Ventilsitz 40 unterbricht.

Das erfindungsgemäße Druckreduzierventil 1, 66 ist nicht auf die beschriebene Schließkugel 42 beschränkt, vielmehr kann praktisch jedes aus dem Stand der Technik bekannte Schließelement, insbesondere ein Schließkegel Verwendung finden. Weiterhin ist die Formgebung des Steuerkolbens 10 an die jeweiligen Ventiltypen anpassbar.

Offenbart ist ein Druckreduzierventil 1, 66, insbesondere für eine Spannvorrichtung, mit einem Steuerkolben 10, der gegen eine einstellbare Kraft von einem Regeldruck beaufschlagt ist, und mit einem Schließkörper 42, der in Schließrichtung von der Kraft einer Druckfeder 38 gegen einen Ventilsitz 40 vorgespannt ist, wobei der Schließkörper 42 durch den Ventilsitz 40 hindurch über ein Übertragungsglied 44 aus seiner Schließstellung in seine Offenstellung bringbar ist, so dass die Druckmittelströmung von einem Druckeingang P zu einem Regeldruckausgang A aufsteuerbar ist. Erfindungsgemäß ist der Steuerkolben 10 zur Aufnahme des Schließkörpers 42 als Hohlkolben ausgeführt und bildet den Ventilsitz 40 für den im Steuerkolben 10 geführten Schließkörper 42 aus.

### Bezugszeichenliste

- 1: Druckreduzierventil
- 2: Ventilgehäuse
- 4: Gewinde
- 6: Dichtring
- 8: Ventilbohrung
- 10: Steuerkolben
- 12: Endabschnitt
- 14: Federteller
- 16: Federraum
- 18: Regelfeder
- 20: Stützabschnitt
- 22: Stirnfläche
- 24: Grundfläche
- 26: Steuerraum
- 28: Steuerkanal
- 30: Vorsprung
- 32: Sicherungsring
- 35: Anschlagfläche
- 36: Federwiderlager
- 38: Druckfeder
- 40: Ventilsitz
- 42: Schließkörper
- 43: Ventilbohrung
- 44: Übertragungsglied
- 45: Axialbohrung
- 46: Stößel
- 47: Anlagefläche
- 48: Strömungskanal
- 50: Aufnahmebohrung
- 52: Innenraum
- 54: Radialbohrung
- 56: Längsachse
- 58: Druckkanal
- 60: Ringkanal
- 62: Radialdichtung

- 64: Ringnut
- 66: Druckreduzierventil
- 68: Radialbund
- 70: Bohrungsabschnitt
- 72: Anschlagfläche
- 74: Anlagefläche
- 76: Anschlag
- 78: Ringstirnfläche
- 80: Drucküberwachungssensor
- 82: Schieber
- 84: Radialbohrung
- 86: Ringnut

## Patentansprüche

1. Druckreduzierventil, insbesondere für eine Spannvorrichtung, mit einem Steuerkolben (10), der gegen eine einstellbare Kraft (K) von einem Regeldruck beaufschlagt ist, und mit einem Schließkörper (42), der in Schließrichtung von der Kraft einer Druckfeder (38) gegen einen Ventilsitz (40) vorgespannt ist, wobei der Schließkörper (42) durch den Ventilsitz (40) hindurch über ein Übertragungsglied (44) aus seiner Schließstellung in seine Offenstellung bringbar ist, so dass die Druckmittelströmung von einem Druckeingang (P) zu einem Regeldruckausgang (A) aufsteuerbar ist, **dadurch gekennzeichnet, dass** der Steuerkolben (10) zur Aufnahme des Schließkörpers (42) als Hohlkolben ausgeführt ist und einen Ventilsitz (40) für den im Steuerkolben (10) geführten Schließkörper (42) ausbildet.

2. Druckreduzierventil nach Anspruch 1, wobei der Steuerkolben (10) in einer Ventilbohrung (8) geführt ist und mit dieser über eine Stirnfläche (22) einen mit dem Regeldruck beaufschlagten Steuerraum (26) begrenzt.

3. Druckreduzierventil nach Anspruch 2, wobei der Steuerraum (26) über zumindest einen Steuerkanal (28) mit dem Regeldruckausgang (A) verbunden ist.

4. Druckreduzierventil nach einem der vorhergehenden Ansprüche, wobei das Übertragungsglied (44) ein gehäusefester Stößel (46) ist, der den Schließkörper (42) in Offenstellung durch den Ventilsitz (40) hindurch gegen die Kraft der Druckfeder (38) abstützt.

5. Druckreduzierventil nach einem der vorhergehenden Ansprüche, wobei der Schließkörper (42) eine Kugel ist.

6. Druckreduzierventil nach einem der vorhergehenden Ansprüche, wobei ein Innenraum (52) des Steuerkolbens (10) über zumindest eine Radialbohrung (54, 84) mit dem Eingangsdruck beaufschlagt ist.

7. Druckreduzierventil nach Anspruch 6, wobei die Radialbohrungen (54; 84) im Bereich des Schließkörpers (42) in den Innenraum (52) des Steuerkolbens (10) einmünden.

8. Druckreduzierventil nach Anspruch 6 oder 7, wobei die Radialbohrungen.(84) in eine am Außenumfang des Steuerkolbens (10) vorgesehene, mit dem Druckeingang (P) über zumindest einen Druckkanal (58) verbundene umlaufende Ringnut (86) oder zumindest eine Tasche einmünden.

9. Druckreduzierventil nach einem der vorhergehenden Ansprüche, wobei der Steuerkolben (10) mit einem Drucküberwachungssensor (80), insbesondere einem elektrischen Schalter, in Wirkverbindung steht.

10. Druckreduzierventil nach einem der vorhergehenden Ansprüche, wobei der Steuerkolben (10) einen Radialbund (68) aufweist, der mit zumindest einem gehäusefesten Anschlag (76) zusammenwirkt.

11. Druckreduzierventil nach Anspruch 9 und 10, wobei der Steuerkolben (10) über den Radialbund (68) den Drucküberwachungssensor (80) betätigt.

12. Druckreduzierventil nach einem der vorhergehenden Ansprüche, wobei die auf den Steuerkolben (10) in Öffnungsrichtung wirkende Kraft (K) durch zumindest eine Regelfeder (18) oder einen Proportionalmagnet aufgebracht wird.

13. Druckreduzierventil nach Anspruch 12, wobei die Vorspannung der Regelfeder (18) über ein Einstellelement, insbesondere eine Stellspindel veränderbar ist, um den Regeldruck zu verändern.

14. Druckreduzierventil nach einem der vorhergehenden Ansprüche, wobei der Druckeingang (P) über zumindest eine Radialdichtung (62) gegenüber dem Regeldruckausgang (A) und gegenüber dem Raum mit der Regelfeder (18) oder dem Proportionalmagneten abgedichtet ist.
